# EUROPÄISCHE PATENTANMELDUNG

(11) **EP 2 790 072 A1**
(43) Veröffentlichungstag der Anmeldung: **15.10.2014**
(21) Anmeldenummer: 13163385.1
(22) Anmeldetag: 11.04.2013
(51) Int. Cl.: G05B 7/02, G05B 11/42

(54) **Hydraulikanordnung mit entkoppeltem Betrieb zweier Ventileinrichtungen**

(71) Anmelder: Siemens Aktiengesellschaft, 80333 München (DE)
(72) Erfinder: Felkl, Hans-Joachim, 91301 Forchheim (DE)

(57) **Zusammenfassung**

Ein Hydraulikaktuator (1) ist über eine Hauptventileinrichtung (2) und eine Zusatzventileinrichtung (3) ansteuerbar. Der Hauptventileinrichtung (2) ist ein Hauptregler (7) vorgeordnet, der einen P-Block (9) und einen I-Block (10) umfasst. Der Zusatzventileinrichtung (3) ist ein Zusatzregler (8) vorgeordnet, der einen Basisblock (11) und einen I-Block (12) umfasst. Die Hydraulikanordnung wird in einem Normalbetrieb oder in einem Sonderbetrieb betrieben. Im Normalbetrieb wird die Zusatzventileinrichtung (3) deaktiviert. Dem Hauptregler (7) werden eine Hauptsollgröße (p*) und eine korrespondierende Hauptistgröße (p) des Hydraulikaktuators (1) zugeführt. Der Hauptregler (7) ermittelt eine Hauptstellgröße (s) und gibt sie der Hauptventileinrichtung (2) vor. Im Sonderbetrieb werden dem Basisblock (11) des Zusatzreglers (8) eine Zusatzsollgröße (a*) und eine korrespondierende Zusatzistgröße (a) des Hydraulikaktuators (1) zugeführt. Der Basisblock (11) des Zusatzreglers (8) ermittelt eine Zusatzstellgröße (s') und gibt sie der Zusatzventileinrichtung (3) vor. Dem I-Block (12) des Zusatzreglers (8) werden die Hauptsollgröße (p*) und die Hauptistgröße (p) zugeführt. Der I-Block (12) des Zusatzreglers (8) ermittelt daraus einen Integralanteil (si'). Der Integralanteil (si') wird auf die Zusatzstellgröße (s') aufgeschaltet. Dem P-Block (9) werden im Sonderbetrieb die Hauptsollgröße (p*) und die Hauptistgröße (p) zugeführt. Der P-Block (9) ermittelt im Sonderbetrieb die Hauptstellgröße (s) und gibt sie der Hauptventileinrichtung (2) vor.

## Beschreibung

Die vorliegende Erfindung betrifft ein Betriebsverfahren für eine Hydraulikanordnung,
- wobei die Hydraulikanordnung einen Hydraulikaktuator umfasst, der über eine Hauptventileinrichtung und eine Zusatzventileinrichtung ansteuerbar ist,
- wobei der Hauptventileinrichtung ein Hauptregler vorgeordnet ist, der einen P-Block und einen I-Block umfasst,
- wobei die Hydraulikanordnung alternativ in einem Normalbetrieb oder in einem Sonderbetrieb betrieben wird,
- wobei im Normalbetrieb
   -- die Zusatzventileinrichtung deaktiviert wird,
   -- dem Hauptregler eine Hauptsollgröße und eine korrespondierende Hauptistgröße des Hydraulikaktuators zugeführt werden und
   -- der Hauptregler anhand der Hauptsollgröße und der Hauptistgröße eine Hauptstellgröße für die Hauptventileinrichtung ermittelt und die Hauptstellgröße der Hauptventileinrichtung vorgibt.

Die vorliegende Erfindung betrifft weiterhin eine Hydraulikanordnung,
- wobei die Hydraulikanordnung einen Hydraulikaktuator umfasst, der über eine Hauptventileinrichtung und eine Zusatzventileinrichtung ansteuerbar ist,
- wobei die Hydraulikanordnung eine Steuereinrichtung aufweist,
- wobei die Steuereinrichtung einen der Hauptventileinrichtung vorgeordneten Hauptregler implementiert, der einen P-Block und einen I-Block umfasst,
- wobei die Steuereinrichtung die Hydraulikanordnung alternativ in einem Normalbetrieb oder in einem Sonderbetrieb betreibt,
- wobei die Steuereinrichtung derart ausgebildet ist, dass im Normalbetrieb
   -- die Zusatzventileinrichtung deaktiviert wird,
   -- dem Hauptregler eine Hauptsollgröße und eine korrespondierende Hauptistgröße des Hydraulikaktuators zugeführt werden und
   -- der Hauptregler anhand der Hauptsollgröße und der Hauptistgröße eine Hauptstellgröße für die Hauptventileinrichtung ermittelt und die Hauptstellgröße der Hauptventileinrichtung vorgibt.

Derartige Betriebsverfahren und derartige Hydraulikanordnungen sind allgemein bekannt.

Bei Hydraulikanordnungen wird üblicherweise der Hydraulikaktuator (beispielsweise eine Hydraulikzylindereinheit oder ein Hydromotor) über eine Ventileinrichtung verstellt. Mittels der Ventileinrichtung ist es möglich, dass der Hydraulikaktuator geregelt betrieben werden kann. Insbesondere bei einer Hydraulikzylindereinheit wird üblicherweise die Position des Kolbens, die vom Kolben ausgeübte Kraft oder eine Verfahrgeschwindigkeit des Kolbens geregelt. Bei einem Hydromotor werden die korrespondierenden rotatorischen Größen geregelt. Als Ventileinrichtungen kommen Servoventile, Proportionalventile oder Schaltventile zum Einsatz.

In vielen Fällen ist es ausreichend, dass zum Betätigen des Hydraulikaktuators eine einzige Ventileinrichtung vorhanden ist. In manchen Fällen ist es jedoch erforderlich, dass (mindestens) zwei Ventileinrichtungen parallel auf den Hydraulikaktuator wirken können. Wenn zu einem bestimmten Zeitpunkt nur eine der beiden Ventileinrichtungen angesteuert wird oder die beiden Ventileinrichtungen gleichartig angesteuert werden, ist dies problemlos. Wenn hingegen zu einem bestimmten Zeitpunkt die beiden Ventileinrichtungen unabhängig voneinander mit einer jeweiligen Stellgröße beaufschlagt werden, dürfen sich die dadurch bewirkten Funktionen nicht gegenseitig stören.

Die Aufgabe der vorliegenden Erfindung besteht darin, Möglichkeiten zu schaffen, mittels derer eine derartige, nicht miteinander koordinierte Ansteuerung der Ventileinrichtungen möglich ist.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 8.

Erfindungsgemäß wird vorgeschlagen, dass der Zusatzventileinrichtung ein Zusatzregler vorgeordnet ist, der einen Basisblock und einen I-Block umfasst und dass im Sonderbetrieb
- dem Basisblock des Zusatzreglers eine Zusatzsollgröße und eine korrespondierende Zusatzistgröße des Hydraulikaktuators zugeführt werden,
- der Basisblock des Zusatzreglers anhand der Zusatzsollgröße und der Zusatzistgröße eine Zusatzstellgröße für die Zusatzventileinrichtung ermittelt und die Zusatzstellgröße der Zusatzventileinrichtung vorgibt,
- dem I-Block des Zusatzreglers die Hauptsollgröße und die Hauptistgröße zugeführt werden,
- der I-Block des Zusatzreglers anhand der Hauptsollgröße und der Hauptistgröße einen Integralanteil ermittelt,
- der Integralanteil auf die Zusatzstellgröße aufgeschaltet wird,
- dem P-Block des Hauptreglers die Hauptsollgröße und die Hauptistgröße zugeführt werden und
- der P-Block des Hauptreglers anhand der Hauptsollgröße und der Hauptistgröße die Hauptstellgröße ermittelt und der Hauptventileinrichtung vorgibt.

In einer bevorzugten Ausgestaltung des Betriebsverfahrens wird im Normalbetrieb geprüft, ob die Hauptsollgröße konstant ist oder variiert. In dem Fall, dass die Hauptsollgröße konstant ist, wird der I-Block des Hauptreglers aktiviert. In dem Fall, dass die Hauptsollgröße variiert, wird der I-Block des Hauptreglers deaktiviert. Beispielsweise können dem I-Block des Hauptreglers je nachdem, ob er aktiviert ist oder nicht, die Hauptsollgröße und die Hauptistgröße zugeführt oder nicht zugeführt werden.

Es ist möglich, dass der Zusatzventileinrichtung ein binär schaltendes Sperrventil vor- oder nachgeordnet ist. In diesem Fall korrespondiert vorzugsweise ein Öffnen des Sperrventils mit einem Übergang vom Normalbetrieb in den Sonderbetrieb und ein Schließen des Sperrventils mit einem Übergang vom Sonderbetrieb in den Normalbetrieb.

In einer besonders bevorzugten Ausgestaltung des Betriebsverfahrens ist vorgesehen,
- dass der I-Block des Hauptreglers als I-Block des Zusatzreglers verwendet wird,
- dass beim Wechsel vom Normalbetrieb in den Sonderbetrieb
   -- das zuletzt ermittelte Ausgangssignal des I-Blocks des Hauptreglers als Anfangssignal für den Normalbetrieb in einem Pufferspeicher zwischengespeichert wird und
   -- ein im Pufferspeicher gespeichertes Anfangssignal für den Sonderbetrieb aus dem Pufferspeicher ausgelesen und in den I-Block des Hauptreglers geladen wird und
- dass beim Wechsel vom Sonderbetrieb in den Normalbetrieb
   -- das zuletzt ermittelte Ausgangssignal des I-Blocks des Hauptreglers als Anfangssignal für den Sonderbetrieb in dem Pufferspeicher zwischengespeichert wird und
   -- das im Pufferspeicher gespeicherte Anfangssignal für den Normalbetrieb aus dem Pufferspeicher ausgelesen und in den I-Block des Hauptreglers geladen wird.

Die Hauptventileinrichtung weist in einem vollständig geöffneten Zustand einen Hauptnennfluss auf. Ebenso weist die Zusatzventileinrichtung in einem vollständig geöffneten Zustand einen Zusatznennfluss auf. Vorzugsweise ist der Zusatznennfluss erheblich größer als der Hauptnennfluss, beispielsweise mindestens zehnmal so groß.

Die Hauptsollgröße und die korrespondierende Hauptistgröße können nach Bedarf bestimmt sein. In der Regel sind die Hauptsollgröße und die korrespondierende Hauptistgröße Positionen oder Kräfte.

In analoger Weise können auch die Zusatzsollgröße und die korrespondierende Zusatzistgröße nach Bedarf bestimmt sein. Beispielsweise können die Zusatzsollgröße und die korrespondierende Zusatzistgröße Beschleunigungen sein.

Der Hydraulikaktuator ist in der Regel als Hydraulikzylindereinheit ausgebildet.

Die Aufgabe wird weiterhin durch eine Hydraulikanordnung mit den Merkmalen des Anspruchs 10 gelöst. Vorteilhafte Ausgestaltungen der erfindungsgemäßen Hydraulikanordnung sind Gegenstand der abhängigen Ansprüche 10 bis 16.

Inhaltlich entsprechen die erfindungsgemäße Hydraulikanordnung und deren Ausgestaltungen einer vorrichtungstechnischen Realisierung des obenstehend erläuterten Betriebsverfahrens und dessen Ausgestaltungen. Zur Vermeidung von Wiederholungen wird daher auf die obenstehenden Erläuterungen verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

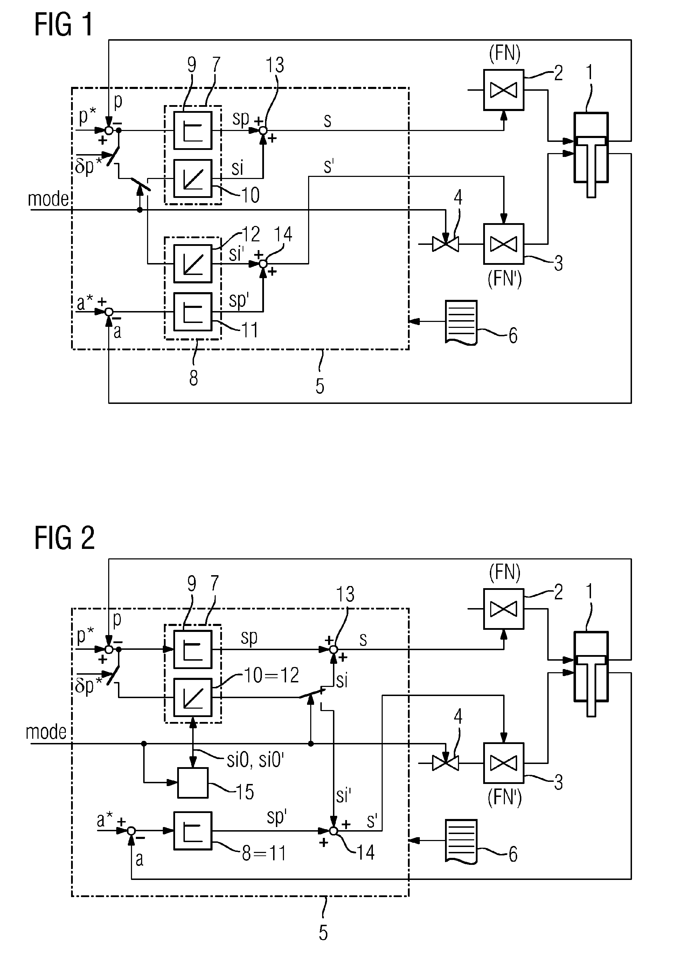

FIG 1 und 2 je eine Hydraulikanordnung.

Gemäß FIG 1 umfasst eine Hydraulikanordnung einen Hydraulikaktuator 1. Der Hydraulikaktuator 1 kann als Hydromotor ausgebildet sein. Gemäß FIG 1 ist der Hydraulikaktuator 1 als Hydraulikzylindereinheit ausgebildet. Der Hydraulikaktuator 1 ist über zwei Ventileinrichtungen 2, 3 ansteuerbar, nachfolgend als Hauptventileinrichtung 2 und als Zusatzventileinrichtung 3 bezeichnet. Die Ergänzung der Ventileinrichtungen 2, 3 mit dem Zusatz "Haupt-" und "Zusatz-" dient - ebenso wie bei anderen Elementen und Größen, denen diese Ergänzungen beigefügt werden - nur der sprachlichen Unterscheidung. Eine weitergehende Bedeutung kommt den Ergänzungen "Haupt-" und "Zusatz-" nicht zu.

Die Hauptventileinrichtung 2 kann als übliches Servoventil oder Proportionalventil ausgebildet sein. Derartige Ventile sind geregelt verstellbar. Alternativ kann die Hauptventileinrichtung 2 zwei oder vier Schaltventile umfassen, die nur binär geschaltet werden können. In diesem Fall können die Schaltventile beispielsweise pulsweitenmoduliert oder pulscodemoduliert gesteuert werden, so dass die Hauptventileinrichtung 2 auch in diesem Fall geregelt verstellbar ist.

Die Zusatzventileinrichtung 3 kann ebenso ausgebildet sein wie die Hauptventileinrichtung 2. Vorzugsweise ist der Zusatzventileinrichtung 3 in Bezug auf ein nicht dargestelltes Hydrauliksystem ein Sperrventil 4 vor- oder nachgeordnet. Das Sperrventil 4 ist vorzugsweise als Schaltventil ausgebildet, dass - niederfrequent - binär geschaltet wird, also entweder den Zustand vollständig geöffnet oder den Zustand vollständig geschlossen aufweist.

Die Hydraulikanordnung weist weiterhin eine Steuereinrichtung 5 auf. Die Steuereinrichtung 5 ist in der Regel als softwareprogrammierbare Steuereinrichtung ausgebildet, die ein Computerprogramm 6 abgearbeitet. Die Steuereinrichtung 5 implementiert für die Hauptventileinrichtung 2 und die Zusatzventileinrichtung 3 jeweils einen Regler 7, 8, welcher der jeweiligen Ventileinrichtung 2, 3 in steuerungstechnischer Hinsicht vorgeordnet ist. Die beiden Regler 7, 8 werden nachfolgend als Hauptregler 7 und als Zusatzregler 8 bezeichnet.

Der Hauptregler 7 ist als PI-Regler (oder höherwertig) ausgebildet. Der Hauptregler 7 umfasst zumindest einen P-Block 9 und einen I-Block 10. Der P-Block 9 weist ein reines Proportionalverhalten auf, der I-Block 10 ein reines Integralverhalten. Der I-Block 10 dient dazu, einen in der Praxis nicht vermeidbaren Leckstrom der Hydraulikflüssigkeit zu erfassen und den Arbeitspunkt der Hauptventileinrichtung 2 derart einzustellen, dass der Leckstrom im stabilen Zustand kompensiert wird. Der I-Block 10 weist zu diesem Zweck eine Nachstellzeit auf. Die Nachstellzeit ist in der Regel relativ groß, so das der Hauptregler 7 einer Veränderung des Arbeitspunkts relativ langsam folgt. Der Zusatzregler 8 umfasst einen Basisblock 11 und einen I-Block 12. Der Basisblock 11 kann eine prinzipiell beliebige Reglercharakteristik realisieren. Im einfachsten Fall weist der Basisblock 11 ein reines Proportionalverhalten auf, so dass der Basisblock 11 ein P-Block ist. Der I-Block 12 weist - analog zum I-Block 10 des Hauptreglers 7 - ein reines Integralverhalten auf.

Die Steuereinrichtung 5 betreibt die Hydraulikanordnung alternativ in einem Normalbetrieb oder in einem Sonderbetrieb. Nachfolgend wird zunächst der Normalbetrieb erläutert, danach der Sonderbetrieb.

Im Normalbetrieb sind ausschließlich der Hauptregler 7 und die Hauptventileinrichtung 2 aktiv. Die Zusatzventileinrichtung 3 und der Zusatzregler 8 sind hingegen deaktiviert. Im Normalbetrieb wirkt die Zusatzventileinrichtung 3 nicht auf den Hydraulikaktuator 1. Im Normalbetrieb werden dem Hauptregler 7 eine Hauptsollgröße p* und eine korrespondierende Hauptistgröße p des Hydraulikaktuators 1 zugeführt. Der Hauptregler 7 ermittelt anhand der Hauptsollgröße p* und der Hauptistgröße p eine Hauptstellgröße s für die Hauptventileinrichtung 2. Insbesondere ermittelt der P-Block 9 des Hauptreglers 7 einen Proportionalanteil sp und ermittelt der I-Block 10 des Hauptreglers 9 einen Integralanteil si. Der Proportionalanteil sp und der Integralanteil si werden in einem Knotenpunkt 13 zur Hauptstellgröße s addiert. Der Hauptregler 7 gibt die Hauptstellgröße s der Hauptventileinrichtung 2 vor.

Die Hauptsollgröße p* und die Hauptistgröße p können beispielsweise Positionen oder Kräfte sein. Mittels des Hauptreglers 7 und der Hauptventileinrichtung 2 kann beispielsweise innerhalb eines Walzwerkes ein Schlingenheber an ein Metallband angestellt werden oder ein Walzgerüst des Walzwerkes kraft- oder dickengeregelt betrieben werden.

Im Sonderbetrieb - siehe FIG 2 - sind der Zusatzregler 8 und die Zusatzventileinrichtung 3 aktiviert. Der P-Block 9 des Hauptreglers 7 und auch die Hauptventileinrichtung 2 sind nicht deaktiviert, werden jedoch anders betrieben als im Normalbetrieb. Der I-Block 10 des Hauptreglers 7 ist hingegen deaktiviert.

Im Sonderbetrieb werden dem Basisblock 11 des Zusatzreglers 8 eine Zusatzsollgröße a* und eine korrespondierende Zusatzistgröße a des Hydraulikaktuators 1 zugeführt. Der Basisblock 11 des Zusatzreglers 8 ermittelt anhand der Zusatzsollgröße a* und der Zusatzistgröße a eine Zusatzstellgröße s' für die Zusatzventileinrichtung 3 und gibt die Zusatzstellgröße s' der Zusatzventileinrichtung 3 vor. Insbesondere in dem Fall, dass der Basisblock 11 ein Proportionalverhalten aufweist, ermittelt der Basisblock 11 somit einen Proportionalanteil sp'.

Dem I-Block 12 des Zusatzreglers 8 werden hingegen nicht die Zusatzsollgröße a* und die Zusatzistgröße a zugeführt, sondern die Hauptsollgröße p* und die Hauptistgröße p. Der I-Block 12 des Zusatzreglers 8 ermittelt anhand dieser Größen p*, p einen Integralanteil si'. Der Proportionalanteil sp' (bzw. allgemeiner der Basisanteil sp') und der Integralanteil si' werden in einem Knotenpunkt 14 zur Zusatzstellgröße s' addiert. Der Integralanteil si' wird somit auf die vom Basisblock 11 des Zusatzreglers 8 ermittelte Zusatzstellgröße s' aufgeschaltet.

Die Zusatzsollgröße a* und die Zusatzistgröße a können beispielsweise Beschleunigungen sein. Im Sonderbetrieb können mittels der Zusatzventileinrichtung 3 und des Basisblocks 11 des Zusatzreglers 8 beispielsweise unerwünschte Schwingungen gedämpft oder kompensiert werden, die im Betrieb der mittels des Hydraulikaktuators 1 verstellten Einrichtung (beispielsweise eines Walzgerüsts) auftreten. Insbesondere zum Dämpfen und Unterdrücken von unerwünschten Schwingungen (Walzenrattern oder mill chatter) oszilliert die Zusatzistgröße a mit einer relativ hohen Frequenz von in der Regel ca. 100 Hz bis ca. 150 Hz.

Im Sonderbetrieb werden die Hauptsollgröße p* und die Hauptistgröße p nicht dem gesamten Hauptregler 7 zugeführt, sondern nur dem P-Block 9 des Hauptreglers 7. Der P-Block 9 des Hauptreglers 7 ermittelt - ebenso wie im Normalbetrieb - den Proportionalanteil sp. Die Arbeitsweise des P-Blockes 9 als solche ist also gegenüber dem Normalbetrieb unverändert. Im Sonderbetrieb korrespondiert die Hauptstellgröße s jedoch direkt mit dem Proportionalanteil sp. Der P-Block 9 gibt somit die Hauptstellgröße s der Hauptventileinrichtung 2 vor.

In einer besonders bevorzugten Ausgestaltung der vorliegenden Erfindung wird im Normalbetrieb geprüft, ob die Hauptsollgröße p* konstant ist oder variiert. Wenn die Hauptsollgröße p* konstant ist (Änderungswert δp* = 0), wird der I-Block 10 des Hauptreglers 7 aktiviert. Wenn die Hauptsollgröße p* hingegen variiert (Änderungswert δp* = 1), wird der I-Block 10 des Hauptreglers 7 deaktiviert. Beispielsweise können zu diesem Zweck dem I-Block 10 des Hauptreglers 7 je nachdem, ob der I-Block 10 aktiviert ist oder nicht, die Hauptsollgröße p* und die Hauptistgröße p zugeführt oder nicht zugeführt werden. Durch das zeitweise Deaktivieren des I-Blocks 10 des Hauptreglers 7 wird erreicht, dass der Arbeitspunkt der Hauptventileinrichtung 2 nur dann nachgeführt wird, wenn ein konstanter Betriebszustand angenommen werden soll. Dynamische Verstellvorgänge haben daher keinen Einfluss auf den Arbeitspunkt.

Die Umstände, anhand derer entschieden wird, ob der Normalbetrieb oder der Sonderbetrieb vorliegt, können nach Bedarf bestimmt sein. Vorzugsweise sind die Betriebsarten (Normalbetrieb und Sonderbetrieb) und der Zustand des Sperrventils 4 miteinander gekoppelt. Insbesondere korrespondieren vorzugsweise ein Öffnen des Sperrventils 4 mit einem Übergang vom Normalbetrieb in den Sonderbetrieb und ein Schließen des Sperrventils 4 mit einem Übergang vom Sonderbetrieb in den Normalbetrieb. Dies kann beispielsweise dadurch erreicht werden, dass die Änderung der Betriebsart direkt die entsprechende Ansteuerung des Sperrventils 4 bewirkt oder umgekehrt das Ansteuern des Sperrventils 4 das Einstellen der entsprechenden Betriebsart bewirkt.

In einem vollständig geöffneten Zustand weist die Hauptventileinrichtung 2 in einen Hauptnennfluss FN auf. In analoger Weise weist die Zusatzventileinrichtung 3 in einem vollständig geöffneten Zustand einen Zusatznennfluss FN' auf. Die obenstehend erläuterte erfindungsgemäße Vorgehensweise ist insbesondere dann von Vorteil, wenn der Zusatznennfluss FN' erheblich größer als der Hauptnennfluss FN ist, insbesondere mindestens das zehnfache beträgt. Beispielsweise kann der Zusatznennfluss FN' das dreißigfache, das fünfzigfache oder unter Umständen sogar ein noch größeres Vielfaches des Hauptnennflusses FN betragen.

Die Hydraulikanordnung von FIG 2 entspricht im Wesentlichen der von FIG 1. Im Gegensatz zu FIG 1 wird bei FIG 2 jedoch der I-Block 10 des Hauptreglers 7 im Sonderbetrieb als I-Block 12 des Zusatzreglers 8 verwendet. Im Sonderbetrieb ermittelt also der I-Block 10 des Hauptreglers 7 den Integralanteil si'. Der I-Block 10 des Hauptreglers 7 gibt den Integralanteil si' der Zusatzventileinrichtung 3 vor. Die technische Wirkung des I-Blockes 10 - nämlich das Einstellen des Arbeitspunktes - bleibt also erhalten. Der I-Block 10 wirkt jedoch im Sonderbetrieb nicht auf die Hauptventileinrichtung 2, sondern auf die Zusatzventileinrichtung 3. Verzerrungen bei der Ansteuerung der Zusatzventileinrichtung 3, welche ohne entsprechende Kompensation zur Folge hätten, dass im zeitlichen Mittel ein von Null verschiedener Ölstrom in den Hydraulikaktuator 1 oder aus ihm heraus fließt, werden somit weiterhin durch den I-Block 10 des Hauptreglers 7 kompensiert. Die Kompensation wirkt jedoch nicht auf die Hauptventileinrichtung 2, sondern auf die Zusatzventileinrichtung 3.

Das Leckstromverhalten der Hauptventileinrichtung 2 und das Leckstromverhalten der Zusatzventileinrichtung 3 unterscheiden sich in der Regel voneinander. Die mittels des I-Blockes 10 eingestellten Arbeitspunkte im Normalbetrieb und im Sonderbetrieb sind daher im Regelfall nicht die gleichen. Um einen stoßfreien Übergang vom Normalbetrieb in den Sonderbetrieb und umgekehrt zu gewährleisten, ist die Steuereinrichtung 5 bei der Ausgestaltung gemäß FIG 2 daher vorzugsweise derart ausgebildet ist, dass sie beim Wechsel der Betriebsart den bisherigen Arbeitspunkt speichert und den I-Block 10 des Hauptreglers 7 entsprechend initialisiert. Dies wird nachfolgend zunächst für den Übergang vom Normalbetrieb in den Sonderbetrieb und danach umgekehrt für den Übergang vom Sonderbetrieb in den Normalbetrieb erläutert.

Man nehme also an, es soll vom Normalbetrieb in den Sonderbetrieb übergegangen werden. Der I-Block 10 weist zum Zeitpunkt des Wechsels der Betriebsart ein bestimmtes Ausgangssignal auf, das heißt den zuletzt ermittelten Integralanteil si. Dieser Wert wird beim Wechsel vom Normalbetrieb in den Sonderbetrieb als Anfangssignal si0 für den Normalbetrieb in einem Pufferspeicher 15 zwischengespeichert. Weiterhin wird aus dem Pufferspeicher 15 ein Anfangssignal si0' für den Sonderbetrieb ausgelesen und in den I-Block 10 des Hauptreglers 7 geladen.

Wenn umgekehrt vom Sonderbetrieb in den Normalbetrieb übergegangen werden soll, wird die inverse Vorgehensweise ergriffen: Auch in diesem Fall weist der I-Block 10 des Hauptreglers 7 zum Zeitpunkt des Wechsels der Betriebsart ein bestimmtes Ausgangssignal auf, das heißt den zuletzt ermittelten Integralanteil si'. Dieser Wert wird beim Wechsel vom Sonderbetrieb in den Normalbetrieb als Anfangssignal si0' für den Sonderbetrieb in dem Pufferspeicher 15 zwischengespeichert. Weiterhin wird aus dem Pufferspeicher 15 das Anfangssignal si0 für den Normalbetrieb ausgelesen und in den I-Block 10 des Hauptreglers 7 geladen.

Im Ergebnis wird somit bei einem Wechsel der Betriebsart der Integralanteil si, si' der jeweils aufgegebenen Betriebsart eingefroren und der Integralanteil si0, si0' der jeweils neu aufgenommenen Betriebsart reaktiviert.

Die vorliegende Erfindung weist viele Vorteile auf. Insbesondere ist es möglich, in beiden Betriebsarten auf einfache Weise eine Leckstromkompensation zu erreichen, ohne den Arbeitspunkt der Hauptventileinrichtung 2 zu verschieben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Hydraulikanordnung,
- wobei die Hydraulikanordnung einen Hydraulikaktuator (1) umfasst, der über eine Hauptventileinrichtung (2) und eine Zusatzventileinrichtung (3) ansteuerbar ist,
- wobei der Hauptventileinrichtung (2) ein Hauptregler (7) vorgeordnet ist, der einen P-Block (9) und einen I-Block (10) umfasst,
- wobei der Zusatzventileinrichtung (3) ein Zusatzregler (8) vorgeordnet ist, der einen Basisblock (11) und einen I-Block (12) umfasst,
- wobei die Hydraulikanordnung alternativ in einem Normalbetrieb oder in einem Sonderbetrieb betrieben wird,
- wobei im Normalbetrieb
-- die Zusatzventileinrichtung (3) deaktiviert wird,
-- dem Hauptregler (7) eine Hauptsollgröße (p*) und eine korrespondierende Hauptistgröße (p) des Hydraulikaktuators (1) zugeführt werden und
-- der Hauptregler (7) anhand der Hauptsollgröße (p*) und der Hauptistgröße (p) eine Hauptstellgröße (s) für die Hauptventileinrichtung (2) ermittelt und die Hauptstellgröße (s) der Hauptventileinrichtung (2) vorgibt,
- wobei im Sonderbetrieb
-- dem Basisblock (11) des Zusatzreglers (8) eine Zusatzsollgröße (a*) und eine korrespondierende Zusatzistgröße (a) des Hydraulikaktuators (1) zugeführt werden,
-- der Basisblock (11) des Zusatzreglers (8) anhand der Zusatzsollgröße (a*) und der Zusatzistgröße (a) eine Zusatzstellgröße (s') für die Zusatzventileinrichtung (3) ermittelt und die Zusatzstellgröße (s') der Zusatzventileinrichtung (3) vorgibt,
-- dem I-Block (12) des Zusatzreglers (8) die Hauptsollgröße (p*) und die Hauptistgröße (p) zugeführt werden,
-- der I-Block (12) des Zusatzreglers (8) anhand der Hauptsollgröße (p*) und der Hauptistgröße (p) einen Integralanteil (si') ermittelt,
-- der Integralanteil (si') auf die Zusatzstellgröße (s') aufgeschaltet wird,
-- dem P-Block (9) des Hauptreglers (7) die Hauptsollgröße (p*) und die Hauptistgröße (p) zugeführt werden und
-- der P-Block (9) des Hauptreglers (7) anhand der Hauptsollgröße (p*) und der Hauptistgröße (p) die Hauptstellgröße (s) ermittelt und der Hauptventileinrichtung (2) vorgibt.

2. Betriebsverfahren nach Anspruch 1, **dadurch gekennzeichnet, dass** im Normalbetrieb geprüft wird, ob die Hauptsollgröße (p*) konstant ist oder variiert, dass in dem Fall, dass die Hauptsollgröße (p*) konstant ist, der I-Block (10) des Hauptreglers (7) aktiviert wird und in dem Fall, dass die Hauptsollgröße (p*) variiert, der I-Block (10) des Hauptreglers (7) deaktiviert wird.

3. Betriebsverfahren nach Anspruch 1 oder 2, **dadurch gekennzeichnet, dass** der Zusatzventileinrichtung (3) ein binär schaltendes Sperrventil (4) vor- oder nachgeordnet ist und dass ein Öffnen des Sperrventils (4) mit einem Übergang vom Normalbetrieb in den Sonderbetrieb und ein Schließen des Sperrventils (4) mit einem Übergang vom Sonderbetrieb in den Normalbetrieb korrespondiert.

4. Betriebsverfahren nach Anspruch 1, 2 oder 3, **dadurch gekennzeichnet,**
- **dass** der I-Block (10) des Hauptreglers (7) im Sonderbetrieb als I-Block (12) des Zusatzreglers (8) verwendet wird,
- **dass** beim Wechsel vom Normalbetrieb in den Sonderbetrieb
-- das zuletzt ermittelte Ausgangssignal (si) des I-Blocks (10) des Hauptreglers (7) als Anfangssignal (si0) für den Normalbetrieb in einem Pufferspeicher (15) zwischengespeichert wird und
-- ein im Pufferspeicher (15) gespeichertes Anfangssignal (si0') für den Sonderbetrieb aus dem Pufferspeicher (15) ausgelesen und in den I-Block (10) des Hauptreglers (7) geladen wird und
- **dass** beim Wechsel vom Sonderbetrieb in den Normalbetrieb
-- das zuletzt ermittelte Ausgangssignal (si) des I-Blocks (10) des Hauptreglers (7) als Anfangssignal (si0') für den Sonderbetrieb in dem Pufferspeicher (15) zwischengespeichert wird und
-- das im Pufferspeicher (15) gespeicherte Anfangssignal (si0) für den Normalbetrieb aus dem Pufferspeicher (15) ausgelesen und in den I-Block (10) des Hauptreglers (7) geladen wird.

5. Betriebsverfahren nach einem der obigen Ansprüche, **dadurch gekennzeichnet, dass** die Hauptventileinrichtung (2) in einem vollständig geöffneten Zustand einen Hauptnennfluss (FN) aufweist, dass die Zusatzventileinrichtung (3) in einem vollständig geöffneten Zustand einen Zusatznennfluss (FN') aufweist und dass der Zusatznennfluss (FN') erheblich größer als der Hauptnennfluss (FN) ist.

6. Betriebsverfahren nach einem der obigen Ansprüche, **dadurch gekennzeichnet, dass** die Hauptsollgröße (p*) und die korrespondierende Hauptistgröße (p) Positionen oder Kräfte sind.

7. Betriebsverfahren nach einem der obigen Ansprüche, **dadurch gekennzeichnet, dass** die Zusatzsollgröße (a*) und die korrespondierende Zusatzistgröße (a) Beschleunigungen sind.

8. Betriebsverfahren nach einem der obigen Ansprüche, **dadurch gekennzeichnet, dass** der Hydraulikaktuator (1) als Hydraulikzylindereinheit ausgebildet ist.

9. Hydraulikanordnung,
- wobei die Hydraulikanordnung einen Hydraulikaktuator (1) umfasst, der über eine Hauptventileinrichtung (2) und eine Zusatzventileinrichtung (3) ansteuerbar ist,
- wobei die Hydraulikanordnung eine Steuereinrichtung (5) aufweist,
- wobei die Steuereinrichtung (5) einen der Hauptventileinrichtung (2) vorgeordneten Hauptregler (7) implementiert, der einen P-Block (9) und einen I-Block (10) umfasst,
- wobei die Steuereinrichtung (5) einen der Zusatzventileinrichtung (3) vorgeordneten Zusatzregler (8) implementiert, der einen Basisblock (11) und einen I-Block (12) umfasst,
- wobei die Steuereinrichtung (5) die Hydraulikanordnung alternativ in einem Normalbetrieb oder in einem Sonderbetrieb betreibt,
- wobei die Steuereinrichtung (5) derart ausgebildet ist, dass im Normalbetrieb
-- die Zusatzventileinrichtung (3) deaktiviert wird,
-- dem Hauptregler (7) eine Hauptsollgröße (p*) und eine korrespondierende Hauptistgröße (p) des Hydraulikaktuators (1) zugeführt werden und
-- der Hauptregler (7) anhand der Hauptsollgröße (p*) und der Hauptistgröße (p) eine Hauptstellgröße (s) für die Hauptventileinrichtung (2) ermittelt und die Hauptstellgröße (s) der Hauptventileinrichtung (2) vorgibt,
- wobei die Steuereinrichtung weiterhin derart ausgebildet ist, dass im Sonderbetrieb
-- dem Basisblock (11) des Zusatzreglers (8) eine Zusatzsollgröße (a*) und eine korrespondierende Zusatzistgröße (a) des Hydraulikaktuators (1) zugeführt werden,
-- der Basisblock (11) des Zusatzreglers (8) anhand der Zusatzsollgröße (a*) und der Zusatzistgröße (a) eine Zusatzstellgröße (s') für die Zusatzventileinrichtung (3) ermittelt und die Zusatzstellgröße (s') der Zusatzventileinrichtung (3) vorgibt,
-- dem I-Block (12) des Zusatzreglers (8) die Hauptsollgröße (p*) und die Hauptistgröße (p) zugeführt werden,
-- der I-Block (12) des Zusatzreglers (8) anhand der Hauptsollgröße (p*) und der Hauptistgröße (p) einen Integralanteil (si') ermittelt,
-- der Integralanteil (si') auf die Zusatzstellgröße (s') aufgeschaltet wird,
-- dem P-Block (9) des Hauptreglers (7) die Hauptsollgröße (p*) und die Hauptistgröße (p) zugeführt werden und
-- der P-Block (9) des Hauptreglers (7) anhand der Hauptsollgröße (p*) und der Hauptistgröße (p) die Hauptstellgröße (s) ermittelt und der Hauptventileinrichtung (2) vorgibt.

10. Hydraulikanordnung nach Anspruch 9, **dadurch gekennzeichnet, dass** die Steuereinrichtung (5) derart ausgebildet ist, dass im Normalbetrieb geprüft wird, ob die Hauptsollgröße (p*) konstant ist oder variiert, dass in dem Fall, dass die Hauptsollgröße (p*) konstant ist, der I-Block (10) des Hauptreglers (7) aktiviert wird und in dem Fall, dass die Hauptsollgröße (p*) variiert, der I-Block (10) des Hauptreglers (7) deaktiviert wird.

11. Hydraulikanordnung nach Anspruch 9 oder 10, **dadurch gekennzeichnet, dass** der Zusatzventileinrichtung (3) ein binär schaltendes Sperrventil (4) vor- oder nachgeordnet ist und dass die Steuereinrichtung (5) derart ausgebildet ist, dass ein Öffnen des Sperrventils (4) mit einem Übergang vom Normalbetrieb in den Sonderbetrieb und ein Schließen des Sperrventils (4) mit einem Übergang vom Sonderbetrieb in den Normalbetrieb korrespondiert.

12. Hydraulikanordnung nach Anspruch 9, 10 oder 11, **dadurch gekennzeichnet, dass** die Steuereinrichtung (5) derart ausgebildet ist,
- dass der I-Block (10) des Hauptreglers (7) im Sonderbetrieb als I-Block (12) des Zusatzreglers (8) verwendet wird,
- dass beim Wechsel vom Normalbetrieb in den Sonderbetrieb
-- das zuletzt ermittelte Ausgangssignal (si) des I-Blocks (10) des Hauptreglers (7) als Anfangssignal (si0) für den Normalbetrieb in einem Pufferspeicher (15) zwischengespeichert wird und
-- ein im Pufferspeicher (15) gespeichertes Anfangssignal (si0') für den Sonderbetrieb aus dem Pufferspeicher (15) ausgelesen und in den I-Block (10) des Hauptreglers (7) geladen wird und
- dass beim Wechsel vom Sonderbetrieb in den Normalbetrieb
-- das zuletzt ermittelte Ausgangssignal (si) des I-Blocks (10) des Hauptreglers (7) als Anfangssignal (si0') für den Sonderbetrieb in dem Pufferspeicher (15) zwischengespeichert wird und
-- das im Pufferspeicher (15) gespeicherte Anfangssignal (si0) für den Normalbetrieb aus dem Pufferspeicher (15) ausgelesen und in den I-Block (10) des Hauptreglers (7) geladen wird.

13. Hydraulikanordnung nach einem der Ansprüche 9 bis 12, **dadurch gekennzeichnet, dass** die Hauptventileinrichtung (2) in einem vollständig geöffneten Zustand einen Hauptnennfluss (FN) aufweist, dass die Zusatzventileinrichtung (3) in einem vollständig geöffneten Zustand einen Zusatznennfluss (FN') aufweist und dass der Zusatznennfluss (FN') erheblich größer als der Hauptnennfluss (FN) ist.

14. Hydraulikanordnung nach einem der Ansprüche 9 bis 13, **dadurch gekennzeichnet, dass** die Hauptsollgröße (p*) und die korrespondierende Hauptistgröße (p) Positionen oder Kräfte sind.

15. Hydraulikanordnung nach einem der Ansprüche 9 bis 14,
**dadurch gekennzeichnet, dass** die Zusatzsollgröße (a*) und die korrespondierende Zusatzistgröße (a) Beschleunigungen sind.

16. Hydraulikanordnung nach einem der Ansprüche 9 bis 15,
**dadurch gekennzeichnet, dass** der Hydraulikaktuator (1) als Hydraulikzylindereinheit ausgebildet ist.
